# EUROPEAN PATENT SPECIFICATION

(11) **EP 0 674 543 B1**
(45) Date of publication and mention of the grant of the patent: **24.02.1999**
(21) Application number: 94903624.8
(22) Date of filing: 10.12.1993
(51) Int. Cl.: B01J 38/58, B01J 38/56, B01J 38/10, C07C 1/04, C07C 27/00, B01J 8/04, B01J 8/06, B01J 8/20, C10G 2/00

(54) **HYDROCARBON SYNTHESIS PROCESS USING EXTERNAL CATALYST REJUVENATION SYSTEM**
KOHLENWASSERSTOFFSYNTHESEVERFAHREN BEI DEM EIN EXTERNES KATALYSSATORREGENERATIONSSYSTEM VERWENDET WIRD
PROCEDE DE SYNTHESE D'HYDROCARBURE UTILISANT UN SYSTEME DE REGENERATION EXTERNE DE CATALYSEUR

(30) Priority: 18.12.1992 US 992981; 04.11.1993 US 113151
(43) Date of publication of application: 04.10.1995
(73) Proprietor: EXXON RESEARCH AND ENGINEERING COMPANY, Florham Park, New Jersey 07932-0390 (US)
(72) Inventor: HSIA, Stephen, J., Baton Rouge, LA 70816 (US)
(74) Representative: Somers, Harold Arnold
(86) International application number: US9312121
(87) International publication number: WO9414537

(56) References cited:
- US-A- 2 540 706
- US-A- 3 754 993
- US-A- 3 826 739
- US-A- 3 915 840
- US-A- 5 157 054
- Fundamentals of Chemical Technology Process Technology of Chemical and Related Industries, Otto Salle Verlag Publishers, Sauerlander Publishing, Frankfurt, Germany 1985 - Chapter 1, "Reaction Technology in Bubble Columns", DECKWER (Note page 5 and page 12, Fig. 1.5 center).

## Description

This invention relates to a continuous process for hydrocarbon synthesis and catalyst regeneration.

### Background of the Invention

Fischer-Tropsch synthesis for the catalytic production of hydrocarbons from synthesis gas, i.e., carbon monoxide and hydrogen, is well known in the technical and patent literature. Similarly, the technology needed to convert natural gas or methane into synthesis gas is also well established. In like manner the conversion of methanol into high quality transportation fuels particularly middle distillate fractions, is also a well recognized technology.

The first commercial Fischer-Tropsch operation utilized a cobalt catalyst, though later iron catalysts were commercialized. The use of nickel-thoria on kieselguhr as a Fischer-Tropsch catalyst was an important advance in this field of catalysis. Additional developments led to more advanced cobalt catalysts comprising cobalt and thoria on kieselguhr, and cobalt-thoria - magnesia on kieselguhr.

In general the Group VIII non-noble metals, iron, cobalt and nickel have been widely used in Fischer-Tropsch reactions, these metals being promoted with various promoters and supported on a variety of supports.

Recently great strides have been made in catalysts for the conversion of synthesis gas, methanol and/or natural gas or methane into hydrocarbons suitable as transportation fuels or other high value products such as lubricants or specialty oils or waxes.

Examples of such advanced catalysts include particulate catalysts comprising cobalt or cobalt and thoria on titania or titania-containing supports, preferably a titania support having a rutile:anatase content of at least about 2:3, as determined in accordance with ASTM D 3720-78:Standard Test Method for Ratio of Anatase to Rutile in Titanium Dioxide Pigments By Use of X-Ray Diffraction. Additional examples of advanced cobalt catalyst include those comprising cobalt promoted with zirconium, hafnium, cerium or uranium and cobalt or cobalt and thoria promoted with rhenium deposited on inorganic oxides of Group III, IV, V, VI and VIII of the Periodic Table of Elements, preferably titania.

The mode of deactivation of such hydrocarbon synthesis catalysts is not too well understood, but is believed to be related, at least somewhat, to the mode in which the hydrocarbon synthesis is carried out; e.g., a different deactivation mode is likely present for catalyst in fixed bed operations than the deactivation mode for slurry phase operations. Thus, fixed bed processes are essentially plug flow operations involving reactant gradients as they progress through the catalyst bed whereas slurry phase operations involve sufficient backmixing tending towards a more uniform distribution of reactants and products throughout the slurry phase. For example, in a fixed bed water would not be present at the start of the reaction and would build up as the reaction progressed through the bed. However, in a slurry phase, e.g., in a slurry bubble column, because of backmixing effects, water will be present throughout the reaction slurry bed. Consequently, deactivation modes, dependent to any degree on the presence of water, will be different for fixed bed and slurry phase processes.

Reactivation - rejuvenation of such deactivated catalyst has been a pressing need in any consideration given to the commercialization of a hydrocarbon synthesis process.

Reactivation - regeneration involving air or oxygen burning of the catalyst to remove the deactivation moieties present on the catalyst followed by a hydrogen reactivation step has been a delicate process which is not always successful.

Similarly, hydrogen rejuvenation treatments have been employed with catalysts operated in fixed beds with, at best, limited and inconsistent recovery of hydrocarbon synthesis activity. In one case, steady state operation in the fixed bed had not been achieved, in other cases excessively high temperatures were employed, and still in other cases the hydrogen treatment was in the absence or substantial absence of hydrocarbon liquids.

US-A-2,540,706 describes the catalytic conversion of a syngas stream by contacting it, whilst rising through a column, with solid catalyst particles. The particles are moved up the column and agitated by a rotating helix. Used catalyst particles overflow the top of the column and fall through a concentric column, where they are stripped and then removed from the system for reactivation.

The development of a simple, reproducible reactivation - regeneration process and treatment of deactivated hydrocarbon synthesis process catalyst would greatly contribute to the commercialization and success of the hydrocarbon synthesis process.

In accordance with the present invention there is provided a process for practising catalytic hydrocarbon synthesis and reactivation - rejuvenation of deactivated hydrocarbon synthesis catalyst on a continuous basis, said process comprising: (a) combining catalyst and synthesis feed and hydrocarbon liquid in a hydrocarbon synthesis first vessel means to produce a reactor slurry comprising catalyst, synthesis feed and synthesis product; (b) collecting deactivated catalyst from the top of the reactor slurry by means of a first downcomer - conduit means, the top of which is fitted with gas disentrainment means and which is located just below the top surface of the reactor slurry; (c) passing the deactivated catalyst down this first downcomer - conduit means from the top of the first vessel means to the bottom of a reactivation - rejuvenation second vessel means, said second vessel means having rejuvenating gas introduction means located at its bottom; (d) forming in said second vessel means a reactivating slurry of catalyst in a hydrocarbon liquid, preferably, reaction product, and rejuvenating gas, whereby the deactivated catalyst is reactivated - rejuvenated; (e) collecting reactivated - rejuvenated catalyst from the top of the reactivating slurry by means of a second downcomer - conduit means the top of which is fitted with gas disentrainment means and which is located just below the top surface of the reactivation slurry; and (f) passing the reactivated - rejuvenated catalyst down the second downcomer - conduit means from the top of the second vessel means to the bottom of the first vessel means; all catalyst downward flows in both the first and second downcomer means occurring solely under the influence of gravity.

Thus, the hydrocarbon synthesis process is practised in a first vessel and the deactivated catalyst is reactivated rejuvenated in a second vessel. The flows of materials are (i) a slurry of deactivated catalyst from the reactor vessel to the reactivation vessel, and (ii) a slurry of reactivated catalyst from the reactivation vessel to the reactor vessel. The flows are through complimentary downcomer conduit means in fluid communication between the respective vessels and are driven solely by gravity, no pumps of lift gases being employed. This arrangement allows for the continuous reactivation - rejuvenation of the catalyst.

Because of the gas disentrainment practised at the top of each downcomer - conduit means, the density of the slurry in each said downcomer - conduit means is higher than the density of the slurry in the surrounding vessel, so the more dense slurry in the downcomer - conduit falls in said downcomer - conduit solely under the influence of gravity.

Rejuvenation of spent catalyst in either synthesis product and/or added liquid hydrocarbon, is disclosed in EP-A-0 590 882, based on USSN 949,934. Recovery of at least about 80+%, preferably at least 90+%, of initial catalyst activity is carried out at elevated temperatures and pressures and with sufficient liquid synthesis product and/or added liquid hydrocarbon for the full dispersion - immersion of the spent catalyst in the liquid. Generally, in those cases the rejuvenation is effected at hydrocarbon synthesis pressures, and at temperatures no lower than about 55 centigrade degrees (100°F) below reaction temperatures. Rejuvenating gas comprising hydrogen or a hydrogen rich gas which may contain inerts such as CH₄, light hydrocarbons etc. but which is substantially free of CO or other hydrocarbon synthesis process feed gases is injected into a slurry of hydrocarbons and catalyst, preferably with sufficient energy from the rejuvenating gas alone to suspend the catalyst particles in the liquid. By use of separate reaction units and rejuvenation - reactivation units it is not necessary that the reactivation - rejuvenation be conducted at the reaction conditions. Indeed, use of separate units permits performing the HCS reaction process and the catalyst reactivation - rejuvenation process on a continuous basis, with each process being performed under optimal, uninterrupted conditions.

Performing the spent catalyst reactivation - rejuvenation process in a dedicated unit is ideal because the reactivation - rejuvenation process is performed in the absence of synthesis gas or other hydrocarbon synthesis process feed. Use of a dedicated unit permits the reactivation - rejuvenation to be conducted in the absence of such synthesis gas or other process feed without the need of interrupting such process feed flow; it is the catalyst which is removed from the synthesis gas feed rather than the converse.

Because the present process results in the continuous reactivation of catalyst taken from the reactor in a dedicated rejuvenation - reactivation zone it is not necessary to monitor the reaction process to determine deactivation trends or overall levels of catalyst activity to warrant reactivation. Further, because portions of the catalyst are being continuously reactivated the overall activity of the catalyst charge is maintained at a high level and process efficiency is maximized.

The overall catalyst activity would be monitored solely to correct massive deactivation resulting from unexpected process upset in which case reactivation of the entire catalyst charge on a total charge basis would be in order.

### Brief Description of The Drawing

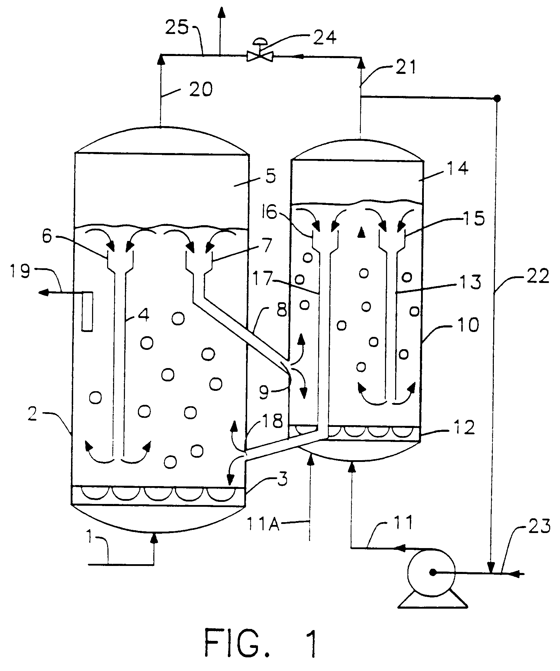

Figure 1 is a schematic of one embodiment of a multiple vessel, continuous catalyst rejuvenation hydrocarbon synthesis process of the present invention.

### Preferred Embodiment

Deactivated hydrocarbon synthesis catalyst, preferably cobalt containing hydrocarbon synthesis catalyst (spent catalyst) is reactivated - rejuvenated on a continuous basis by use of one or more dedicated reactivation - rejuvenation vessel means (reactivation unit) wherein the spent catalyst in synthesis product and/or added liquid hydrocarbon is passed from the hydrocarbon synthesis process reactor in the substantial absence of synthesis gas or process feed through a first downcomer - conduit means topped by gas disentrainment means into one or more rejuvenation - reactivation vessel means (reactivation unit) wherein the spent catalyst dispersed and immersed in liquid synthesis product and/or added liquid hydrocarbon is rejuvenated and the rejuvenated catalyst, still suspended in synthesis reactor product and/or added liquid hydrocarbon but disengaged from regenerating gas is passed from the reactivation unit through a second downcomer conduit means topped with gas disentrainment means back to the reactor unit, all catalyst flows being solely under the influence of gravity.

In the reaction vessel the spent catalyst downcomer - conduit means is positioned such that the top of the downcomer - conduit means is in the synthesis reaction slurry, preferably at or near but still below the the top surface of the synthesis slurry of catalyst and synthesis reaction product in the reaction vessel, the top of the downcomer - conduit means receiving and capturing spent catalyst and liquid synthesis product slurry disengaging the gas present in the slurry by means of the gas disentrainment means and passing said degassed slurry down the downcomer - conduit under the influence of gravity and through the downcomer conduit means combination to an exit orifice whereby the spent catalyst - hydrocarbon slurry is introduced into the reactivation unit at or near the bottom of said unit. The exit orifice is preferably fitted with a baffle means which functions to prevent rejuvenation gas introduced into the bottom of the reactivation - rejuvenation unit from entering the bottom of the downcomer - conduit means and interfering with the downward flow of catalyst therein. Hydrogen is simultaneously introduced into the reactivation rejuvenation unit which is maintained at reactivation temperature and pressure. If liquid hydrocarbons are to be used either in addition to or in place of the liquid synthesis product as the liquid in which the catalyst is dispersed and immersed, said liquid hydrocarbon can be added into the bottom of the reactivation unit.

In the reactivation unit the spent catalyst in synthesis reaction product and/or liquid hydrocarbon slurry and hydrogen rise from the bottom to the top of the reactivation unit, the catalyst being reactivated in the course of the assent. To ensure good dispersion and complete reactivation one or more recycle downcomer means are preferably employed in the reactivation unit whereby catalyst near the top of the reactivation unit is disengaged from the gas in the unit and is recycled back to the bottom of the reactivation unit. The recycle downcomer is a substantially vertical pipe, open at both ends topped by a gas disentrainment means as described hereinafter and preferably guarded at its open bottom by a gas baffle or deflector to keep rejuvenation gas from entering the bottom of the recycle downcomer.

Reactivated catalyst near the top of the reactivation unit is disengaged from the reactivation hydrogen gas and any other light gaseous hydrocarbons and falls through the second downcomer conduit means for reintroduction through the exit orifice of said second conduit means into the bottom of the reaction unit for recycle to the HCS process. This exit orifice is likewise preferably fitted with a baffle means to prevent synthesis gas from entering into the bottom of said downcomer - conduit means and interfering with the downward flow of catalyst therein. To ensure optimal use of the catalyst in the reaction unit one or more recycle downcomer means are preferably present in the reaction unit so that catalyst near the top of the reaction unit, when disengaged from any gaseous products or unreacted feed, is recycled through the downcomer to the bottom of the reaction vessel for circulation in the reaction zone. This recycle downcomer means is similarly a substantially vertical pipe, open at both ends, topped by a gas disentrainment means, as described hereinafter, and preferably guarded at its open bottom by a gas baffle or deflector to prevent synthesis gas from entering the bottom of the recycle downcomer. This catalyst recycling downcomer is described in EP-A 94903617.2, which has WO94/14735 as an equivalent and is based on, USSN 994,218 in the names of Mauldin, Pedrick and Behrmann. To facilitate catalyst cycling in the various downcomers and downcomer - conduit means combinations, the tops of the downcomers of the different units are fitted with catalyst directing means, such as trays, pans or funnels which direct the catalyst into the downcomer.

The catalyst slurries in either of the hydrocarbon synthesis reactor or reactivation - rejuvenation reactor once disengaged from the different gases in the different units by the gas disentrainment means at the top of the downcomer conduit will be of higher density than the catalyst slurries in the surrounding vessels. Gas will be disentrained from the respective slurries using the gas disentrainment means and because of the presence of the catalyst directing means, (e.g. trays or funnels) at the top of the downcomer the falling catalyst will fall onto the directing means and thereby be directed into the recycling downcomer means for efficient recycling to the bottom of the respective unit or passed through the downcomer - conduit means to the bottom of the complimentary unit in the unit pair.

Hydrocarbon synthesis processes are carried out under slurry phase conditions, at elevated temperatures and pressures. Pressures typically range from 517.1 kPa to 3.10 MPa (75-450 PSIA), more preferably 1.03 to 2.07 MPa (150-300 PSIA). Temperatures may range from about 175°C to 450°C, preferably 175°C to 420°C, more preferably 175°C to 300°C. For Fischer-Tropsch processes hydrogen to carbon monoxide ratios in the feed gas may range from about 0.5 to 4.0, preferably about 0.7 to 2.5. In slurry phase operation, the slurry usually comprises about 10 wt% to 50 wt% catalyst solids, preferably 30 wt% to 40 wt% catalysts solids. The catalyst can be maintained in suspension in the slurry liquid by a combination of product recycle liquid, slurry recycle liquid, and injected synthesis gas feed. Preferably, essentially all of the energy required for maintaining the catalyst suspended in the slurry liquid is furnished by the synthesis gas feed.

For ease of operation the rejuvenation technique can be effected at hydrocarbon synthesis reaction conditions, whatever they may be but preferably temperatures and pressures optimized for catalyst reactivation regeneration may be used. Typically, the temperature may range to about (55 centigrade degrees) 100°F below synthesis conditions while pressures are maintained at synthesis conditions. Thus regeneration - rejuvenation is conducted at a temperature in the range 121 to 260°C (250-500°F), preferably 182 to 227°C (360 to 440°F) while pressure ranges from 517.1 kPa to 3.10 MPa (75 to 450 PSIA), preferably 1.03 to 2.07 MPa (150 to 300 PSIA).

Hydrogen treat rates during rejuvenation typically range from about 0.125 to 4.994 m³/kg (2-80 SCF/lb) of catalyst, preferably 0.312 to 1.249 m³/kg about (5-20 SCF/lb) of catalyst; or on another basis from about 0.031 to 1.249 m³/kg (0.5 to 20), preferably 0.062 to 0.312 m³/kg (1-5 SCF/lb) catalyst - hydrocarbon mixture. Hydrogen partial pressure is in the range 103.4 kPa to 2.07 MPa (15 to 300 PSIA), preferably 344.8 kPa to 1.034 MPa (50 to 150 PSIA). The time for rejuvenation varies with hydrogen treat rates, temperatures, etc., but is usually accomplished in about 30 seconds to 10 hours, preferably about 1 minute to 2 hours, more preferably 20 minutes to 2 hours. Rejuvenation times in the present invention may be controlled to a degree by controlling the rate of flow between the unit so as to either lengthen or shorten the catalyst holdup - recycle time in the rejuvenation unit and the number of potential recycles the catalyst undergoes through the internal recycle downcomer in the rejuvenation unit.

Pure or plant hydrogen may be used. If plant hydrogen is used it must, of course, be free of known hydrogen synthesis catalyst poisons, as well as being substantially free of CO, the presence of which will interfere with the rejuvenation process.

While the mechanism for rejuvenation is uncertain, its occurrence is clearly demonstrable. However, those skilled in the art will not continue the rejuvenation procedure beyond the point of maximum activity recovery (a point easily determined with but a few experiments) because of the possibility that the liquid hydrocarbons in which the catalyst is slurred will undergo hydrogenolysis with attendant serious consequences for the catalyst. Perhaps, the reason that slurry phase hydrogen rejuvenation had not been attempted previously was the widespread belief that hydrogen treatment at elevated temperatures and pressures of hydrocarbon in the presence of a hydrogenation catalyst would lead to hydrogenolysis of the liquids.

The spent catalyst is dispersed and immersed in a hydrocarbon liquid during reactivation - rejuvenation. The liquid product of the hydrocarbon synthesis process is just such a hydrocarbon stream being liquid at reaction conditions, generally inert and a good solvent for the hydrogen rejuvenation gas. This liquid reaction product contain C₅+ hydrocarbons, usually C₅-C₁₀₀ hydrocarbons, plus small amounts of dissolved water and other synthesis gas products.

The hydrocarbon liquid used to disperse and immerse the spent catalyst during the reactivation - rejuvenation process can also comprise separately added high boiling paraffins containing small amounts of primary and secondary alcohols, acids, esters and mixtures thereof. The high boiling paraffins include C₁₀-C₁₀₀ linear or branched chain hydrocarbons. The liquid can contain oxygen atoms in the molecular structure but not sulfur, phosphorus, arsenic antimony or nitrogen atoms since these act as poisons in HCS processes. Examples of specific deliberately added slurry liquids materials are: dodecane, tetradecane, hexadecane, octadecane, hexatriacontane, tetracosane, octacosane, dotriacontane, tetracontane, tetratetracontane, and the like. The hydrocarbon liquid in which the spent catalyst is dispersed and immersed can also comprise a mixture of the hydrocarbon synthesis product hydrocarbons and deliberated added hydrocarbons or other organic species selected from the above recited list. Preferred slurry liquid materials are Fischer-Tropsch waxes and C₁₆-C₁₈ alkyl hydrocarbons.

The catalyst employed in the hydrocarbon synthesis process is any catalyst known to be active in Fischer-Tropsch synthesis. For example, Group VIII metals, whether supported or unsupported, are known Fischer-Tropsch catalysts. Of these, iron, cobalt and ruthenium are preferred, particularly iron and cobalt, most particularly cobalt.

A preferred catalyst is supported on an inorganic refractory oxide selected from Groups III, IV, V, VI, and VIII of the Periodic chart of the elements. Preferred supports include silica, alumina, silica-alumina, the Group IVB oxides, most preferably titania (primarily in the rutile form), and generally supports having a surface area of less than about 100 m²/gm, preferably 70 m²/gm and less.

The catalytic metal is present in catalytically active amounts, usually about 100 wt%, (the higher concentrations being typical when iron based catalysts are employed), preferably 2-40 wt%, more preferably about 2-25 wt%. Promoters may be added to the catalyst and are well known in the Fischer-Tropsch catalyst art. Promoters can include ruthenium (when it is not the primary catalytic metal), rhenium, hafnium, cerium, and zirconium, and are usually present in amounts less than the primary catalytic metal (except for ruthenium which may be present in co-equal amounts), but the promoter:metal ratio should be at least about 1:10. Preferred promoters are rhenium and hafnium. Useful catalysts are described in U.S. Patents 4,568,663; 4,663,305; 4,542,122.

Catalyst particle size is important and particle sizes may range from that which is reasonably separable from the synthesis product to that which is reasonably able to be dispersed in a slurry phase. Particle sizes of 1-200 microns, preferably about 20 to 150 microns meet these requirements. Particles of this size which are easily separable from the synthesis product are those most advantageously benefitted by use of downcomers to provide improved dispersion. Particles of this size tend to be more influenced by gravity than are smaller particles which tend to stay in suspension and not settle out.

Figure 1 presents one embodiment of the process of the present invention.

Hydrocarbon synthesis gas or reaction feed is introduced via line (1) into reaction vessel (2) maintained at reaction temperature and pressure. The hydrocarbon synthesis gas or other reaction feed is distributed in Vessel (2) via distribution means (3) which insures even distribution of feed stream in the reaction vessel and contacting therein with the catalyst. The reaction proceeds as the reaction mixture proceeds up the vessel. To insure optimal use of the catalyst, downcomer means (4) is situated in the vessel (2). Catalyst disengages from the gaseous product and any unreacted gaseous feed component in gas disengaging zone (5) of vessel (2) and the catalyst fall under it's own weight onto catalyst directing means (6) of downcomer (4) and is recycled to the bottom of vessel (2). Similarly a portion of the catalyst in vessel (2) when disengaged from the gas falls into catalyst directing means (7) at the top of downcomer/conduit combination (8). The catalyst and liquid synthesis product in (8) is introduced by orifice (9) into the bottom of reactivation vessel (10). Hydrogen via line (11) is introduced into vessel (10) and distributed in said vessel by distribution means (12). Rejuvenation of the catalyst insured by means of downcomer (13) which cycles catalyst which is disengaged in gas disengaging zone (14) and falls into catalyst directing means (15) to the bottom of the reactivation vessel (10). A portion of the reactivated catalyst which has been disengaged from reactivation gas and any light gaseous hydrocarbons present therein in disengagement zone (14) falls under its own weight onto catalyst directing means (16) at the top of downcomer - conduit combination (17) for passage through (17) and introduction via orifice (18) into the bottom of reactor vessel (2) for recycle to the reaction process. Hydrocarbon product is recovered via line (19) from reaction vessel (2) while synthesis gas and light hydrocarbons are recovered from vessel (2) via line (20). Hydrogen is recovered from vessel (10) via line (21) and recycled to vessel (10) via lines (22) and (11). Fresh hydrogen can be introduced into the reactivation vessel (10) via line (23). Pressure control system (24) on line (25) between vessels (10) and (2) insures zero ΔP between the tops of the two vessels and ensures that catalyst flow between the two vessels proceeds smoothly.

If the reactivation is practiced in vessel (10) in the presence of added hydrocarbons or organics, such added hydrocarbon/organic can be introduced into vessel (12) via line (11) or separate line (11A).

## Claims

1. A process for practising catalytic hydrocarbon synthesis and reactivation - rejuvenation of deactivated hydrocarbon synthesis catalyst on a continuous basis, said process comprising: (a) combining catalyst and synthesis feed and hydrocarbon liquid in a hydrocarbon synthesis first vessel means to produce a reactor slurry comprising catalyst, synthesis feed and synthesis product; (b) collecting deactivated catalyst from the top of the reactor slurry by means of a first downcomer - conduit means, the top of which is fitted with gas disentrainment means and which is located just below the top surface of the reactor slurry; (c) passing the deactivated catalyst down this first downcomer - conduit means from the top of the first vessel means to the bottom of a reactivation - rejuvenation second vessel means, said second vessel means having rejuvenating gas introduction means located at its bottom; (d) forming in said second vessel means a reactivating slurry of catalyst in a hydrocarbon liquid, preferably reaction product, and rejuvenating gas, whereby the deactivated catalyst is reactivated - rejuvenated; (e) collecting reactivated - rejuvenated catalyst from the top of the reactivating slurry by means of a second downcomer - conduit means, the top of which is fitted with gas disentrainment means and which is located just below the top surface of the reactivation slurry; and (f) passing the reactivated - rejuvenated catalyst down the second downcomer - conduit means from the top of the second vessel means to the bottom of the first vessel means; all catalyst downward flows in both the first and second downcomer means occurring solely under the influence of gravity.

2. The process of claim 1, wherein the first vessel means includes recycle downcomer means topped with gas disentrainment means for circulating catalyst within the hydrocarbon synthesis first vessel means.

3. The process of claim 1, wherein the second vessel means includes recycle downcomer means topped with gas disentrainment means for circulating catalyst within the reactivator - rejuvenator second vessel means.

4. The process of claim 2 or claim 3, wherein entry of unwanted gas into the bottom of the respective recycle downcomer is guarded against by gas baffle or deflector means.

5. The process of any preceding claim, wherein in steps (c) and (f) the entry of unwanted gas in either vessel into the exit of the downcomer - conduit means from the other is guarded against by gas baffle or deflector means.

## Patentansprüche

1. Verfahren zur Durchführung von katalytischer Kohlenwasserstoffsynthese und Reaktivierung-Auffrischung von desaktiviertem Kohlenwasserstoffsynthesekatalysator auf kontinuierlicher Basis, bei dem (a) Katalysator und Syntheseeinsatzmaterial und Kohlenwasserstoffflüssigkeit in einer ersten Gefäßeinrichtung zur Kohlenwasserstoffsynthese kombiniert werden, um eine Reaktoraufschlammung zu erzeugen, die Katalysator, Syntheseeinsatzmaterial und Syntheseprodukt umfaßt, (b) desaktivierter Katalysator aus dem oberen Bereich der Reaktoraufschlämmung mittels einer ersten Fallrohr-Rohrleitungseinrichtung aufgefangen wird, deren oberer Bereich mit Einrichtungen zur Verhinderung des Mitreißens von Gas versehen ist und unmittelbar unter der oberen Oberfläche der Reaktoraufschlämmung angeordnet ist, (c) der desaktivierte Katalysator in dieser ersten Fallrohr-Rohrleitungseinrichtung von dem oberen Bereich der ersten Gefäßeinrichtung zu dem Boden einer zweiten Gefäßeinrichtung zur Reaktivierung-Auffrischung abwärts geleitet wird, wobei die zweite Gefäßeinrichtung an ihrem Boden angeordnete Einbringungseinrichtungen für Auffrischungsgas aufweist, (d) in der zweiten Gefäßeinrichtung eine Reaktivierungsaufschlämmung von Katalysator in einer Kohlenwasserstoffflüssigkeit, vorzugsweise Reaktionsprodukt, und Auffrischungsgas gebildet wird, wodurch der desaktivierte Katalysator reaktiviert-aufgefrischt wird; (e) reaktivierter-aufgefrischter Katalysator aus dem oberen Bereich der Reaktivierungsaufschlämmung mittels einer zweiten Fallrohr-Rohrleitungseinrichtung aufgefangen wird, deren oberer Bereich mit Einrichtungen zur Verhinderung des Mitreißens von Gas versehen ist und der unmittelbar unter der oberen Oberfläche der Reaktivierungsaufschlämmung angeordnet ist, und (f) der reaktivierte-aufgefrischte Katalysator vom oberen Bereich der zweiten Gefäßeinrichtung zu dem Boden der ersten Gefäßeinrichtung die zweite Fallrohr-Rohrleitungseinrichtung abwärts geleitet wird, wobei der gesamte Katalysator sowohl in der ersten als auch der zweiten Fallrohreinrichtung nur unter dem Einfluß der Schwerkraft abwärts fließt.

2. Verfahren nach Anspruch 1, bei dem die erste Gefäßeinrichtung Rückführungsfallrohreinrichtungen umfaßt, die oben mit Einrichtungen zur Verhinderung des Mitreißens von Gas versehen sind, um Katalysator innerhalb der ersten Gefäßeinrichtung zur Kohlenwasserstoffsynthese zu zirkulieren.

3. Verfahren nach Anspruch 1, bei dem die zweite Gefäßeinrichtung Rückführungsfallrohreinrichtungen umfaßt, die oben mit Einrichtungen zur Verhinderung des Mitreißens von Gas versehen sind, um Katalysator innerhalb der zweiten Gefäßeinrichtung zur Reaktivierung-Auffrischung zu zirkulieren.

4. Verfahren nach Anspruch 2 oder Anspruch 3, bei dem Gasprall- oder -ablenkeinrichtungen vor Eintritt von unerwünschtem Gas in den unteren Bereich des jeweiligen Rückführungsfallrohrs schützen.

5. Verfahren nach einem der vorhergehenden Ansprüche, bei dem in den Stufen (c) und (f) Gasprall- oder -ablenkeinrichtungen vor Eintritt von unerwünschtem Gas von einem Gefäß in das jeweilige andere Gefäß in den Ausgang der Fallrohr-Rohrleitungseinrichtung schützen.

## Revendications

1. Procédé de synthèse catalytique d'hydrocarbures et de réactivation-régénération d'un catalyseur de synthèse d'hydrocarbures désactivé suis base continue, ledit procédé comprenant les étapes consistant : (a) a combiner un catalyseur, une charge de synthèse et un liquide hydrocarboné dans un premier moyen à cuve de synthèse d'hydrocarbures pour produire une suspension réactionnelle comprenant du catalyseur, de la charge de synthèse et du produit de synthèse; (b) à recueillir le catalyseur désactivé au sommet de la suspension réactionnelle au moyen d'un premier moyen à conduite descendante, dont la partie supérieure est équipée d'un moyen de désentraînement de gaz et qui est situé juste au-dessous de la surface supérierue de la suspension réactionnelle; (c) à faire descendre le catalyseur désactivé le long de ce premier moyen à conduite descendante de la partie supérieure du premier moyen à cuve a la partie inférieure d'un second moyen à cuve de réactivation-régénération, ledit second moyen à cuve présentant un moyen d'introduction de gaz de régénération situé dans sa partie inférieure; (d) à former dans ledit second moyen à cuve une suspension de réactivation de catalyseur dans un liquide hydrocarboné, de préférence dans le produit réactionnel, et de gaz de régénération, de manière que le catalyseur désactivé soit réactivé-régénéré; (e) à recueillir le catalyseur réactivé-régénéré au sommet de la suspension de réactivation au moyen d'un second moyen à conduite descendante, dont le sommet est équipé d'un moyen de désentraînement de gaz et qui est situé juste en dessous de la surface supérieure de la suspension de réactivation; et (f) à faire descendre le catalyseur réactivé-régénéré le long du second moyen à conduite descendante de la partie supérieure du second moyen à cuve à la partie inférieure du premier moyen à cuve; tous les flux descendants de catalyseur à la fois dans le premier et le second moyens à conduite descendante ne se faisant que sous l'influence de la pesanteur.

2. Procédé selon la revendication 1, dans lequel le premier moyen à cuve comprend un moyen de recyclage à colonne descendante recouvert d'un moyen de désentraînement de gaz pour faire circuler le catalyseur dans le premier moyen à cuve de synthèse d'hydrocarbures.

3. Procédé selon la revendication 1, dans lequel le second moyen à cuve comprend un moyen de recyclage à colonne descendante recouvert d'un moyen de désentraînement de gaz pour faire circuler le catalyseur dans le second moyen à cuve de réactivation-régénération.

4. Procédé selon la revendication 2 ou 3, dans lequel l'entrée de gaz non souhaité dans la partie inférieure de la colonne descendante de recyclage respective est empêchée par des moyens à chicanes ou déflecteurs pour le gaz.

5. Procédé selon l'une quelconque des revendications précédentes, dans lequel, aux étapes (c) et (f), l'entrée de gaz non souhaité dans l'une ou l'autre cuve dans la sortie du moyen à conduite descendante de l'autre est empêchée par des moyens à chicanes ou déflecteurs pour le gaz.
